# EUROPEAN PATENT SPECIFICATION

(11) **EP 3 525 268 B1**
(45) Date of publication and mention of the grant of the patent: **16.09.2020**
(21) Application number: 18781568.3
(22) Date of filing: 08.03.2018
(51) Int. Cl.: H01M 10/0525, H01M 4/74, H01M 10/0562, H01M 2/02, H01M 4/66, H01M 4/80, H01M 4/76, H01M 10/04

(54) **METHOD FOR MANUFACTURING LITHIUM SECONDARY BATTERY**
VERFAHREN ZUR HERSTELLUNG EINER LITHIUMSEKUNDÄRBATTERIE
PROCÉDÉ DE FABRICATION D'UNE BATTERIE SECONDAIRE AU LITHIUM

(30) Priority: 06.04.2017 KR 20170044955
(43) Date of publication of application: 14.08.2019
(73) Proprietor: LG Chem, Ltd., Seoul 07336 (KR)
(72) Inventor: YOU, Min-Kyu, Daejeon 34122 (KR); KANG, Sung-Joong, Daejeon 34122 (KR); KIM, Ju-Ryoun, Daejeon 34122 (KR); UHM, In-Sung, Daejeon 34122 (KR)
(74) Representative: Plasseraud IP
(86) International application number: PCT/KR2018/002789
(87) International publication number: WO 2018/186597

(56) References cited:
- WO-A1-2014/068777
- JP-A- 2000 106 154
- KR-A- 20130 097 338
- KR-A- 20160 032 992
- KR-B1- 101 056 378
- US-A1- 2012 308 886
- US-A1- 2015 037 689
- US-B2- 8 524 393

## Description

### TECHNICAL FIELD

The present disclosure relates to a method for manufacturing a lithium secondary battery. More particularly, the present disclosure relates to a method for manufacturing a lithium secondary battery which can produce a battery by introducing an electrode active material into the pores of a three-dimensional porous current collector provided in a battery casing and then pressing the battery casing, and thus requires no separate process for manufacturing an electrode.

The present application claims priority to Korean Patent Application No. 10-2017-0044955 filed on April 6, 2017 in the Republic of Korea.

### BACKGROUND ART

A lithium secondary battery having high applicability to various groups of products and high electrical properties, such as energy density, has been used generally not only in portable instruments but also for electric vehicles (EV) or hybrid vehicles (HV) driven by an electrical driving source.

Such a lithium secondary battery has a primary advantage of significantly reducing the use of fossil fuel, and has been given many attentions as a novel energy source for improving eco-friendly characteristics and energy efficiency in that it generates no byproduct after the use of energy.

A lithium secondary battery is a device in which a positive electrode and a negative electrode electrically react with each other to generate electricity. Such secondary batteries may be classified into stacked structures, wound structures (jelly roll-type structures) or stacked/folded structures, depending on the structure of an elelctrode assembly.

Among them, an electrode assembly having a stacked structure is formed by cutting a preliminarily formed positive electrode, a preliminarily formed separator and a preliminarily formed negative electrode to a predetermined size and stacking them successively. Herein, each separator is disposed between a positive electrode and a negative electrode.

Meanwhile, although demand of lithium secondary batteries has been increased recently by virtue of high capacity, high output and low cost, there is a limitation in the conventional processes for manufacturing the batteries. Particularly, it is required to increase the loading amount of an electrode active material and to reduce the number of electrode assembly stacks in order to realize high capacity and low cost. However, due to the processing problems related therewith, some phenomena including an imbalance in loading amount of an electrode active material and defects in processing an electrode, such as low adhesion of an electrode active material layer, may be generated. Particularly, due to an increase in distance between a current collector and an electrode active material layer, there is a problem in that the output characteristics of a battery are degraded rapidly.

Documents US 2015/037689, WO 2014/068777 and US 2012/308886 relate to secondary battery having porous bodies as current collectors.

### DISCLOSURE

### Technical Problem

The present disclosure is designed to solve the problems generated in the process for manufacturing a high-capacity electrode according the related art, and therefore the present disclosure is directed to providing a method for manufacturing a lithium secondary battery which avoids a need for a separate process for manufacturing an electrode required essentially in the conventional process for manufacturing a battery.

### Technical Solution

In one aspect of the present disclosure, there is provided a method for manufacturing a lithium secondary battery which includes the steps of: (S1) preparing a battery frame including a three-dimensional porous positive electrode current collector provided at one side in a battery casing and a three-dimensional porous negative electrode current collector provided at the other side in the battery casing; (S2) introducing a positive electrode active material to the pores formed in the positive electrode current collector, and introducing a negative electrode active material to the pores formed in the negative electrode current collector; and (S3) pressurizing the battery frame to carry out pressing.

Herein, in step S1, the battery frame may further include a separator interposed between the positive electrode current collector and the negative electrode current collector.

In addition, the battery casing may be an aluminum pouch or aluminum can.

In addition, each of the positive electrode current collector and the negative electrode current collector may have any one form selected from the porous structures composed of metallic foam, metallic mesh and metallic fibers.

Meanwhile, step S2 may be carried out under vacuum.

In addition, in step S2, the positive electrode current collector and the negative electrode current collector may be vibrated.

In addition, in step S2, each of the positive electrode active material and the negative electrode active material may be introduced in the form of slurry or in the form of a dry active material coated with a binder.

Meanwhile, step S3 may be carried out together with a step of drying the introduced positive electrode active material and the introduced negative electrode active material.

Meanwhile, the lithium secondary battery may be a solid state battery.

### Advantageous Effects

According to an embodiment of the present disclosure, an electrode active material is introduced into the pores of a three-dimensional porous current collector provided in a battery casing and then the battery casing is pressed to obtain a battery. Therefore, there is no need for a separate process for manufacturing an electrode, thereby simplifying a process for manufacturing a battery.

In addition, since the three-dimensional porous current collector functions as a support which supports the active material, it is possible to overcome the structural limit of an electrode according to the related art, and to obtain a battery having a single stack of electrode assembly, not a plurality of electrode assembly stacks.

Further, according to the present disclosure, it is possible to reduce the amount of a binder used for the electrode active material.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic view illustrating introduction of each electrode active material to a three-dimensional porous electrode current collector according to an embodiment of the present disclosure.
FIG. 2 is a schematic view illustrating a step of pressurizing a battery frame to carry out pressing according to an embodiment of the present disclosure.

### [Description of Drawing Numerals]

10: Porous positive electrode current collector
11: Positive electrode active material
20: Porous negative electrode current collector
21: Negative electrode active material
30: Separator
100: Battery casing

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Hereinafter, the method for manufacturing a lithium secondary battery according to the present disclosure will be explained.

First, a battery frame including a three-dimensional porous positive electrode current collector provided at one side in a battery casing and a three-dimensional porous negative electrode current collector provided at the other side in the battery casing is prepared (step S1).

Herein, the battery casing 100 functions as a casing material for the subsequently manufactured battery and may be a currently used aluminum pouch or aluminum can.

Herein, the inner surface of the battery casing 100 may be coated with a coating layer including an insulator material.

In addition, the battery frame may further include a separator 30 interposed between the positive electrode current collector 10 and the negative electrode current collector 20 and preventing a short-circuit between the positive electrode and the negative electrode.

Meanwhile, each of the three-dimensional porous positive electrode current collector 10 and negative electrode current collector 20 may have any one form selected from the porous structures composed of metallic foam, metallic mesh and metallic fibers.

Herein, the porous electrode current collector has pores formed therein, and the electrode current collector may have a porosity of 15-50%, preferably 20-40%. By virtue of such a range of porosity, the pores are filled with an adequate amount of electrode active material to increase the contact area between the electrode active material and the current collector, thereby providing a battery with improved electroconductivity, increased loading amount and reduced resistance.

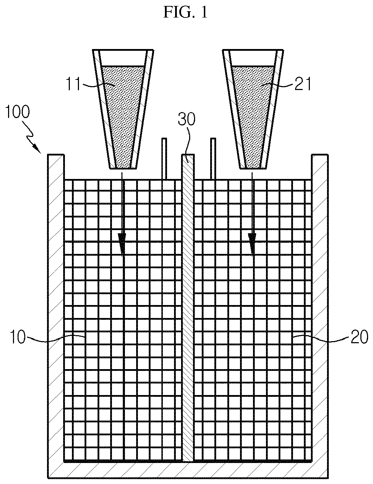

Next, a positive electrode active material 11 is introduced to the pores formed in the positive electrode current collector 10 and a negative electrode active material 21 is introduced to the pores formed in the negative electrode current collector 20 (step S2). FIG. 1 shows step S2 schematically.

Herein, step S2 may be carried out under vacuum, and the positive electrode current collector and the negative electrode current collector may be vibrated. Thus, it is possible to inject the electrode active materials more easily to the pores formed in the porous positive electrode current collector 10 and negative electrode current collector 20.

Meanwhile, in step S2, each of the positive electrode active material 11 and the negative electrode active material 21 may be introduced in the form of slurry or in the form of a dry active material coated with a binder. When each electrode active material is introduced in the form of a dry active material, it is possible to dry the electrode more easily as compared to the electrode active material introduced in the form of slurry.

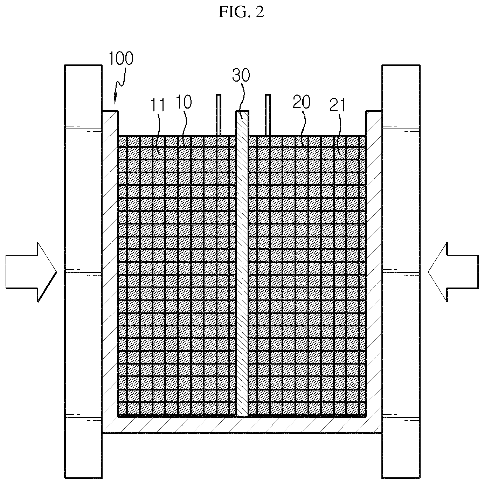

Then, the battery frame is pressurized to carry out pressing (step S3). FIG. 2 shows step S3 schematically.

Through this step, the positive electrode and the negative electrode are finished in the battery frame so that they may function as electrodes. In addition, the positive electrode and the negative electrode are formed to be in close contact with each other with a separator interposed therebetween, and thus lithium ion transport between both electrodes may be facilitated.

Herein, step S3 may be carried out by further heating the battery frame so that a step of drying the introduced positive electrode active material and the introduced negative electrode active material may be performed together.

In addition, similarly to step S2, step S3 may be carried out under vacuum and the battery frame may be vibrated. Thus, it is possible to introduce the electrode active materials to the pores formed in the porous positive electrode current collector and negative electrode current collector more easily.

By virtue of the pressing step, it is possible to fabricate a battery to have a desired shape.

After step S3, an electrolyte, such as a non-aqueous electrolyte, is injected to the battery frame to finish a battery. Further, the above-mentioned process may be used as a process for manufacturing a solid state battery, particularly an inorganic solid state battery, besides a conventional lithium secondary battery using a non-aqueous electrolyte.

Herein, the method for manufacturing a solid state battery will be explained in more detail. A solid electrolyte may be added to an electrode active material slurry during the step of forming the slurry, and then the slurry may be introduced to a current collector to obtain a battery. In a variant, an electrode active material may be coated with a solid electrolyte, a dry electrode active material may be introduced to a current collector, and then heat treatment may be carried out to obtain a battery.

According to an embodiment of the present disclosure, it is possible to avoid a need for a separate process for manufacturing an electrode, which, otherwise, is essentially required for the conventional process for manufacturing a battery. Thus, it is possible to simplify a process for manufacturing a battery. Further, since the process for manufacturing an electrode is eliminated, it is possible to solvent the problems, such as an imbalance in loading amount of an electrode active material and low adhesion of an electrode active material layer, generated in the process for manufacturing a high-capacity electrode according the related art.

In addition, it is possible to overcome a structural limit of an electrode by using a three-dimensional porous current collector, and thus to obtain a battery having a single stack of electrode assembly, not a plurality of electrode assembly stacks.

Particularly, since the method according to the present disclosure uses a three-dimensional porous current collector, it is possible to reduce the amount of a binder used for the electrode active material. Further, even when using no binder, the porous current collector may function as a support for the electrode active material so that the electrode active material may be fixed in the pores of the porous current collector.

The present disclosure has been described in detail. However, it should be understood that the detailed description and specific examples are given by way of illustration only, since various changes and modifications within the scope of the disclosure will become apparent to those skilled in the art from this detailed description. Therefore, the embodiments disclosed herein are for illustrative purposes only and the scope of the present disclosure is not limited thereto. The scope of the present disclosure is defined by the following claims and it should be understood that other changes and modifications made within the equivalents thereof are also included in the scope of the present disclosure.

## Claims

1. A method for manufacturing a lithium secondary battery which comprises the steps of:
(S1) preparing a battery frame comprising a three-dimensional porous positive electrode current collector (10) provided at one side in a battery casing (100) and a three-dimensional porous negative electrode current collector (20) provided at the other side in the battery casing;
(S2) introducing a positive electrode active material (11) to the pores formed in the positive electrode current collector, and introducing a negative electrode active material (21) to the pores formed in the negative electrode current collector; and
(S3) pressurizing the battery frame to carry out pressing.

2. The method manufacturing a lithium secondary battery according to claim 1, wherein the battery frame further comprises a separator (30) interposed between the positive electrode current collector and the negative electrode current collector, in step (S1).

3. The method manufacturing a lithium secondary battery according to claim 1, wherein the battery casing (100) is an aluminum pouch or aluminum can.

4. The method manufacturing a lithium secondary battery according to claim 1, wherein each of the positive electrode current collector and the negative electrode current collector has any one form selected from the porous structures composed of metallic foam, metallic mesh and metallic fibers.

5. The method manufacturing a lithium secondary battery according to claim 1, wherein step S2 is carried out under vacuum.

6. The method manufacturing a lithium secondary battery according to claim 1, wherein the positive electrode current collector and the negative electrode current collector are vibrated, in step S2.

7. The method manufacturing a lithium secondary battery according to claim 1, wherein each of the positive electrode active material (11) and the negative electrode active material (21) is introduced in the form of slurry or in the form of a dry active material coated with a binder, in step S2.

8. The method manufacturing a lithium secondary battery according to claim 1, wherein step S3 is carried out together with a step of drying the introduced positive electrode active material (11) and the introduced negative electrode active material (21).

9. The method manufacturing a lithium secondary battery according to claim 1, wherein the lithium secondary battery is a solid state battery.

## Patentansprüche

1. Verfahren zur Herstellung eines Lithium-Akkumulators, das die Schritte umfasst:
(S1) Herstellen eines Batterierahmens, umfassend einen dreidimensionalen porösen Stromabnehmer der positiven Elektrode (10), der an einer Seite in einem Batteriegehäuse (100) bereitgestellt ist, und einen dreidimensionalen porösen Stromabnehmer der negativen Elektrode(20), der an der anderen Seite in dem Batteriegehäuse bereitgestellt ist;
(S2) Einführen eines Aktivmaterials der positiven Elektrode (11) in die Poren, die in dem Stromabnehmer der positiven Elektrode gebildet sind, und Einführen eines Aktivmaterials der negativen Elektrode (21) in die Poren, die in dem Stromabnehmer der negativen Elektrode gebildet sind; und
(S3) unter Druck setzen des Batterierahmens, um Pressen durchzuführen.

2. Verfahren zur Herstellung eines Lithium-Akkumulators nach Anspruch 1, wobei der Batterierahmen weiterhin einen Separator (30) umfasst, der in Schritt (S1) zwischen dem Stromabnehmer der positiven Elektrode und dem Stromabnehmer der negativen Elektrode zwischengeschaltet ist.

3. Verfahren zur Herstellung eines Lithium-Akkumulators nach Anspruch 1, wobei das Batteriegehäuse (100) ein Aluminiumbeutel oder eine Aluminiumdose ist.

4. Verfahren zur Herstellung eines Lithium-Akkumulators nach Anspruch 1, wobei jeder der Stromabnehmer der positiven Elektrode und der Stromabnehmer der negativen Elektrode eine beliebige Form aufweisen ausgewählt aus den porösen Strukturen, bestehend aus Metallschaum, Metallgewebe und Metallfasern.

5. Verfahren zur Herstellung eines Lithium-Akkumulators nach Anspruch 1, wobei Schritt S2 unter Vakuum durchgeführt wird.

6. Verfahren zur Herstellung eines Lithium-Akkumulators nach Anspruch 1, wobei in Schritt S2 der Stromabnehmer der positiven Elektrode und der Stromabnehmer der negativen Elektrode in Schwingung versetzt werden.

7. Verfahren zur Herstellung eines Lithium-Akkumulators nach Anspruch 1, wobei jedes des Aktivmaterials der positiven Elektrode (11) und des Aktivmaterials der negativen Elektrode (21) in Form einer Aufschlämmung oder in Form eines trockenen Aktivmaterials, das mit einem Bindemittel beschichtet ist, in Schritt S2 eingeführt wird.

8. Verfahren zur Herstellung eines Lithium-Akkumulators nach Anspruch 1, wobei Schritt S3 zusammen mit einem Schritt Trocknen des eingeführten Aktivmaterials der positiven Elektrode (11) und des eingeführten Aktivmaterials der negativen Elektrode (21) durchgeführt wird.

9. Verfahren zur Herstellung eines Lithium-Akkumulators nach Anspruch 1, wobei der Lithium-Akkumulator ein Festkörperakkumulator ist.

## Revendications

1. Procédé de fabrication d'une batterie secondaire au lithium qui comprend les étapes de :
(S1) préparation d'un cadre de batterie comprenant un collecteur de courant d'électrode positive poreux tridimensionnel (10) prévu d'un côté dans un boîtier de batterie (100) et un collecteur de courant d'électrode négative poreux tridimensionnel (20) prévu de l'autre côté dans le boîtier de batterie ;
(S2) introduction d'un matériau actif d'électrode positive (11) dans les pores formés dans le collecteur de courant d'électrode positive, et introduction d'un matériau actif d'électrode négative (21) dans les pores formés dans le collecteur de courant d'électrode négative ; et
(S3) application de pression sur le cadre de batterie pour réaliser un pressage.

2. Procédé de fabrication d'une batterie secondaire au lithium selon la revendication 1, dans lequel le cadre de batterie comprend en outre un séparateur (30) interposé entre le collecteur de courant d'électrode positive et le collecteur de courant d'électrode négative, dans l'étape (S1).

3. Procédé de fabrication d'une batterie secondaire au lithium selon la revendication 1, dans lequel le boîtier de batterie (100) est un sachet en aluminium ou une canette en aluminium.

4. Procédé de fabrication d'une batterie secondaire au lithium selon la revendication 1, dans lequel chacun du collecteur de courant d'électrode positive et du collecteur de courant d'électrode négative a une forme quelconque choisie parmi les structures poreuses composées d'une mousse métallique, d'une maille métallique et de fibres métalliques.

5. Procédé de fabrication d'une batterie secondaire au lithium selon la revendication 1, dans lequel l'étape S2 est réalisée sous vide.

6. Procédé de fabrication d'une batterie secondaire au lithium selon la revendication 1, dans lequel le collecteur de courant d'électrode positive et le collecteur de courant d'électrode négative sont soumis à des vibrations, dans l'étape S2.

7. Procédé de fabrication d'une batterie secondaire au lithium selon la revendication 1, dans lequel chacun du matériau actif d'électrode positive (11) et du matériau actif d'électrode négative (21) est introduit sous la forme d'une pâte ou sous la forme d'un matériau actif sec revêtu d'un liant, dans l'étape S2.

8. Procédé de fabrication d'une batterie secondaire au lithium selon la revendication 1, dans lequel l'étape S3 est réalisée conjointement avec une étape de séchage du matériau actif d'électrode positive (11) introduit et du matériau actif d'électrode négative (21) introduit.

9. Procédé de fabrication d'une batterie secondaire au lithium selon la revendication 1, dans lequel la batterie secondaire au lithium est une batterie à l'état solide.
